# EUROPÄISCHE PATENTSCHRIFT

(11) **EP 0 842 393 B1**
(45) Veröffentlichungstag und Bekanntmachung des Hinweises auf die Patenterteilung: **13.01.1999**
(21) Anmeldenummer: 96904772.9
(22) Anmeldetag: 14.02.1996
(51) Int. Cl.: G01B 11/27, G01C 15/00

(54) **VERFAHREN ZUM GEGENSEITIGEN AUSRICHTEN VON KÖRPERN UND LAGEMESSSONDE HIERFÜR**
METHOD OF MUTUALLY ALIGNING BODIES AND POSITION-MEASURING SENSOR THEREFOR
PROCEDE POUR ALIGNER DES ELEMENTS ENTRE EUX ET SONDE DE MESURE DE POSITION UTILISEE A CET EFFET

(30) Priorität: 12.12.1995 DE 19546405
(43) Veröffentlichungstag der Anmeldung: 20.05.1998
(73) Patentinhaber: Prüftechnik Dieter Busch AG, 85737 Ismaning (DE)
(72) Erfinder: LYSEN, Heinrich, D-85748 Garching (DE)
(86) Internationale Anmeldenummer: EP9600623
(87) Internationale Veröffentlichungsnummer: WO9721980

(56) Entgegenhaltungen:
- EP-A- 0 518 572
- US-A- 5 029 251
- US-A- 5 042 505

## Beschreibung

Die Erfindung bezieht sich auf ein Verfahren zum gegenseitigen Ausrichten von Körpern, insbesondere zum Parallelrichten von Wellen, Walzen und dgl., und auf eine Lagemeßsonde zum Durchführen des Verfahrens.

Bisher wurden zur Winkelvermessung zum Zwecke der gegenseitigen Ausrichtung von Körpern, z.B. von Achsen, Walzen, Rollen, Spindeln, Drehöfen und dgl., deren Antrieben wie Ketten, Riemen, Getriebe, Kardan und dgl. sowie deren zugehörigen Tragelementen wie Stuhlung, Maschinenbetten, Fundamenten u.s.w. mit Meßgenauigkeiten unter 1mm/m optische Meßeinrichtungen wie Theodoliten, Autokollimatoren, Interferometer und Laser und als weitere Hilfsmittel Markierungen, Targets, Penta-, Dachkant-, Trippel-Prismen, Spiegel, Detektoren, Stative und dgl. in sehr zeitaufwendiger Weise eingesetzt.

Der Erfindung liegt die Aufgabe zugrunde, ein Verfahren anzugeben, das die Winkelvermessung von gegenseitig auszurichtenden Körpern mit einem gegenüber den bekannten Einrichtungen und Hilfsmitteln hierfür wesentlich geringeren zeitlichen und z.T. auch konstruktiven Aufwand durchgeführt werden kann.

Die vorgenannte Aufgabe wird durch die Merkmale des Patentanspruchs 1 gelöst.

Im Gegensatz zu den bekannten Verfahren, bei denen in der Regel mehrere Einrichtungen und Hilfsmittel an den zu vermessenden Körpern befestigt, aufeinander ausgerichtet und dann gemeinsam mit den Körpern in einem Meßzyklus bewegt werden müssen, braucht bei dem erfindungsgemäßen Verfahren nur eine einzige, einfach zu handhabende, mit einem optischen Kreisel ausgerüstete Lagemeßsonde in wenigen Meßpositionen an jeweils zwei in Bezug aufeinander auszurichtenden Körpern angesetzt und hinsichtlich Gyrowinkel und Inklination direkt oder elektronisch abgelesen zu werden, um feststellen zu können, ob überhaupt und ggf. welche Lagekorrekturen zur Erzielung der gewünschten Ausrichtung nötig sind. Die hierfür erforderliche Mannmeßzeit ist bei weitem kürzer als die unter Verwendung der bekannten Einrichtungen und Hilfsmittel erforderliche. Es ist eine Reduzierung der Mannmeßzeit um bis zum 95 % zu erwarten.

Die Erfindung beruht auf der Erkenntnis, daß optische Kreisel sich durch einen sehr geringen Rauschpegel auszeichnen - so hat z.B. ein bekannter faseroptischer Kreisel (in der engl. Literatur abgekürzt als FOG bezeichnet) einen Rauschpegel von nur 0,1° pro Wurzelstunde bei einem Faserring von circa 80mm Durchmesser - und daß auf der Basis eines solchen geringen Rauschpegels bei Einhaltung einer in der Größenordnung von mehreren Sekunden messenden Zeitspanne für das Ansetzen der Meßsonde an den beiden auszurichtenden Körpern zwecks Gewinnung eines Meßwerte-Paares bei weitem ausreichend genaue Meßwerte gewonnen werden können, weil in dieser kurzen, aber für die Praxis ausreichenden Kreiselumsetzzeit ein nach den gegebenen Möglichkeiten passend bemessener Kreisel nur um wenige µrad driftet, was für die meisten Meßprobleme ausreichend ist.

Die Meßgenauigkeit ist um so größer, je schneller und/oder öfter die Meßsonde mit ihrem optischen Kreisel umgesetzt werden kann.

Der Erfindung liegt des weiteren die Aufgabe zugrunde, eine Lagemeßsonde zum Ermitteln der räumlichen Lage zweier Körper in Bezug aufeinander zu schaffen, die eine hohe Meßgenauigkeit für Winkelmessungen aufweist und besonders zur Durchführung des erfindungsgemäßen Verfahrens geeignet ist.

Die vorgenannte weitere Aufgabe wird durch die im Patentanspruch 2 angegebenen Merkmale gelöst.

Die Unteransprüche 3 bis 8 haben bevorzugte Ausgestaltungen der Lagemeßsonde nach Patentanspruch 2 zum Gegenstand.

Die Erfindung wird nachstehend anhand der Zeichnung an einem Ausführungsbeispiel noch näher erläutert.

In der Zeichnung zeigt jeweils schematisch
- Fig. 1: drei in Bezug aufeinander auszurichtende Körper sowie eine an diesen der Reihe nach anzusetzende Lagemeßsonde in perspektivischer Darstellung, und
- Fig. 2: eine bevorzugte Ausführung einer zum Vermessen der relativen Winkelposition der Körper in Fig.1 geeigneten Lagemeßsonde ebenfalls in perspektivischer Darstellung.

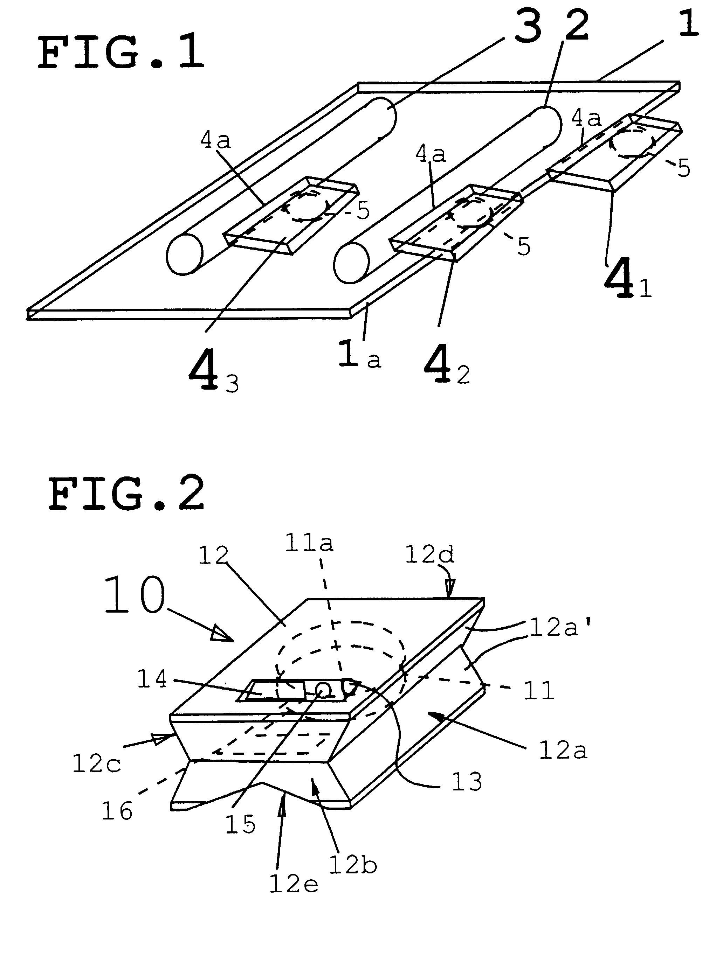

Die Fig. 1 zeigt in perspektivischer Darstellung einen ersten, als Träger dienenden Körper 1, der der Einfachheit halber als Platte dargestellt ist, sowie zwei weitere gegenüber dem ersten Körper 1 und in Bezug aufeinander auszurichtende Körper 2 und 3 von zylindrischem Außenumriß. Bei entsprechender Gestaltung im Detail könnte es sich bei dem Körper 1 um ein Maschinenbett und bei den Körpern 2 und 3 um Walzen handeln, die an dem Maschinenbett um ihre Längsachse drehbar gelagert und hinsichtlich ihrer Drehachsen parallel zueinander sowie in einer definierten Winkelstellung bezüglich einer Referenzfläche an dem Maschinenbett auszurichten sind.

Im Ausführungsbeispiel dient als Referenzfläche am Körper 1 die ebene seitliche Stirnfläche la, und die Längsachsen der walzenförmigen Körper 2 und 3 seien parallel zueinander und zu der Referenzfläche la auszurichten.

Die für das Ausrichten in die vorgenannte gewünschte gegenseitige Winkelposition evtl. nötigen Lagekorrekturwerte werden, wie in Fig. 1 dargestellt, dadurch gewonnen, daß eine Lagemeßsonde 4 mit ihrer Kontaktfläche 4a nacheinander (4-1, 4-2, 4-3) an die Referenzfläche la am Körper 1, parallel zur Längsmittelachse an den zylindrischen Umfang des Körpers 2 und parallel zur Längsmittelachse an den zylindrischen Umfang des Körpers 3 angesetzt und dabei jeweils in einer solchen räumlichen Ausrichtung gehalten wird, daß sich die Ebene 5a des Faserringes eines in der Lagemeßsonde 4 befindlichen, bezüglich der Sondenkontaktfläche 4a definiert ausgerichteten faseroptischen Kreisels 5 parallel zu einer Referenzebene im Raume, z.B. parallel zur Horizontalebene, erstreckt. Nach jedem Ansetzen an einen der Körper 1, 2 und 3 wird der von dem faseroptischen Kreisel gemessene Gyrowinkel bezüglich einer Referenzrichtung in der Faserringebene abgelesen oder als entsprechendes elektrisches Signal von der Lagemeßsonde an eine nicht dargestellte Datenverarbeitungseinrichtung ausgegeben.

Faseroptische Kreisel zeichnen sich durch einen nur sehr kleinen Driftwinkel pro Zeiteinheit aus. Praktisch sind derzeit Driftwinkel von einigen wenigen µrad pro Wurzelsekunde erzielbar, so daß eine für die Praxis in den meisten Fällen gut ausreichende Genauigkeit der Gyrowinkelanzeige über den Meßvorgang hinweg zu erhalten ist, wenn darauf geachtet wird, die Lagemeßsonde in einer Zeitspanne in der Größenordnung von z.B. 10 bis 20 Sekunden zwischen den Körpern 1, 2 und 3 umzusetzen und abzulesen. Dabei kann z.B. auch so vorgegangen werden, daß als erstes eine Referenzpositionsmessung an der Körperfläche la des Körpers 1, dann als nächstes eine Lagepositionsmessung am Umfang des Körpers 2, dann wieder eine Referenzpositionsmessung an der Körperfläche la und dann erneut eine Lagepositionsmessung am Umfang des Körpers 3 durchgeführt wird, wobei für jede Umsetzung die vorbestimmte Zeitspanne zur Verfügung steht.

Zur Ermittlung der gegenseitigen Ausrichtung der Körper 1, 2 und 3 im Raume kann es nötig sein, weitere Referenz- und Lagepositionsmessungen an den Körpern 1, 2 und 3 in einer räumlichen Winkelposition der Lagemeßsonde 4 parallel zu einer Referenzebene durchzuführen, die mit der Referenzebene, die für die ersten Messungen herangezogen wurde, einen definierten Winkel, z.B. 90°, einschließt.

Die Fig. 2 zeigt schematisch in perspektivischer Darstellung eine Lagemeßsonde 10, die für die Durchführung des erfindungsgemäßen Meßverfahrens besonders geeignet ist und als Lagemeßsonde 4 bei der Winkelvermessung der Körper 1, 2 und 3 in Fig. 1 eingesetzt werden könnte. Diese Meßsonde 10 ist mit einem optischen Kreisel 11, vorzugsweise einem faseroptischen Kreisel, ausgerüstet, der in einem Sondengehäuse 12 fest angeordnet ist. Das Sondengehäuse 12 weist vier in gegenüberliegenden Paaren zueinander parallele sowie in aneinander angrenzenden Paaren zueinander senkrechte äußere Kontaktflächen 12a - 12d sowie eine weitere Kontaktfläche 12e, die zu allen vier vorgenannten Kontaktflächen senkrecht steht, auf. Die Angaben "parallel zueinander" und "senkrecht zueinander" gelten für die Kontaktflächen 12a - 12e de facto auch dann, wenn es sich bei diesen nicht um durchgehend ebene Flächen handelt, sondern, wie in Fig. 2 dargestellt, um Flächen, die jeweils aus zwei miteinander einen flachen Winkel einschließenden ebenen Flächenabschnitten z.B. 12a' bestehen. Wegen des Einbaus des optischen Kreisels in fester definierter Position in die Lagemeßsonde 10 ist die Ebene lla von dessen optischem Ring, hier des Faserrings, auch in definierter Weise bezüglich der äußeren Kontaktflächen 12a - 12e am Gehäuse 12 der Lagemeßsonde 10 ausgerichtet.

Des weiteren weist die Lagemeßsonde 10 eine Computerschnittstelle 13 für Eichzwecke und Meßdatenverarbeitung, eine Anzeige 14 für Gyrowinkel und Inklinationen, eine Zerotaste und Anzeigeumschaltung 15 und ein genaues doppelwirkendes Inklinometer 16 zum Feststellen der Winkelposition der Lagemeßsonde 10 bezüglich der Vertikalen auf.

Die Computerschnittstelle 13 ermöglicht es, die jeweils im angelegten Zustand der Lagemeßsonde vorhandenen Daten des Gyrowinkels und der Inklination an einen nicht dargstellten Rechner weiterzuleiten, der aus diesen Daten die Werte der Korrekturen errechnet, die evtl. nötig sind, um die aufeinander auszurichtenden Körper 1, 2 und 3 in den gewünschten Ausrichtzustand zu bringen.

Nach dem erfindungsgemäßen Verfahren und mit der erfindungsgemäßen Lagemeßsonde lassen sich Körperachsen, Körperflächen und dgl. auch in anderer Weise als parallel zueinander, z.B. in Bezug aufeinander senkrecht, auf einfache Weise sehr genau mit einem geringen zeitlichen Aufwand ausrichten.

Prinzipiell verwendbar sind auch optische Kreisel in Form von Laserkreiseln.

## Patentansprüche

1. Verfahren zum gegenseitigen Ausrichten von Körpern, insbesondere zum Parallelrichten von Wellen, Walzen und dgl., **dadurch gekennzeichnet**, daß
a) mittels einer mindestens einen optischen Kreisel (5) enthaltenden, an die auszurichtenden Körper (1, 2, 3) definiert ansetzbaren Lagemeßsonde (4) die Lage eines ersten (1) der auszurichtenden Körper in einer vorgegebenen ersten Meßebene als Referenzposition ermittelt wird,
b) dann mittels der Lagemeßsonde (4) innerhalb einer vorgegebenen Zeitspanne nach der Referenzpositionsermittlung die Lage eines nächsten Körpers (2 oder 3) in einer mit der ersten Meßebene übereinstimmenden oder zu dieser parallelen Ebene ermittelt wird,
c) dann im Bedarfsfalle weitere Lagemessungen gemäß den Schritten a) und b) an den Körpern (1, 2, 3) bezüglich einer von der ersten Meßebene verschiedenen, mit dieser einen definierten Winkel, insbesondere 90°, einschließenden zweiten Meßebenen durchgeführt werden, und
d) dann, sofern nötig, auf der Grundlage der mittels der Lagemeßsonde (4) in den Meßebenen festgestellten Lagedifferenzen der beiden Körper (1 und 2 bzw.3) notwendige Lagekorrekturen an dem einen und/oder anderen der beiden Körper durchgeführt werden.

2. Lagemeßsonde (10) zum Ermitteln der räumlichen Lage zweier Körper in Bezug aufeinander, **gekennzeichnet** durch
a) ein Gehäuse (12) mit mindestens einer definiert an eine Gegenfläche am jeweiligen Körper ansetzbaren äußeren Kontaktfläche (12a -12e), und
b) mindestens einen optischen Kreisel (11) in dem Gehäuse (12), der mit der Ebene (11a) seines optischen Ringes bezüglich der Kontaktfläche (12a -12e) definiert ausgerichtet ist.

3. Lagemeßsonde nach Anspruch 2, **dadurch gekennzeichnet**, daß der optische Kreisel ein faseroptischer Kreisel ist.

4. Lagemeßsonde nach Anspruch 2 oder 3, **gekennzeichnet durch** Mittel (14) zum von außerhalb des Gehäuses (12) erkennbaren Anzeigen
aa) der Ausrichtung der Ebene (11a) des optischen Ringes bezüglich der Vertikalen und
bb) der Winkelstellung des optischen Ringes bezüglich einer Referenzrichtung in der Ringebene.

5. Lagemeßsonde nach einem der Ansprüche 2 bis 4, **dadurch gekennzeichnet**, daß das Gehäuse (12) mehrere in Bezug aufeinander angeordnete Kontaktflächen (12a -12e) aufweist.

6. Lagemeßsonde nach Anspruch 5, **dadurch gekennzeichnet**, daß mindestens eine Kontaktfläche (12a) zum definierten Ansetzen an einen auszurichtenden Körper von zylindrischem oder kegeligem Außenumriß aus zwei miteinander einen flachen Winkel einschließenden ebenen Flächenabschnitten (12a') besteht.

7. Lagemeßsonde nach einem der Ansprüche 2 bis 6, **gekennzeichnet durch** ein Lot (16) am oder im Gehäuse (12) zum Feststellen insbesondere der Lage der Ebene (11a) des optischen Ringes bezüglich der Vertikalen.

8. Lagemeßsonde nach einem der Ansprüche 2 bis 7, **gekennzeichnet durch** eine Computerschnittstelle (13) zur weiteren Datenverarbeitung.

## Claims

1. Method for mutually aligning bodies, in particular for the parallel alignment of shafts, rollers and the like, wherein
a) by means of a position measuring sensor (4), which includes at least one optical gyroscope (5) and which can be applied in a defined manner to the bodies (1, 2, 3) to be aligned, the position of a first body (1) of the bodies to be aligned in a predetermined first measurement plane is determined as reference position,
b) then, by means of the position measuring sensor (4), in a predetermined time interval after the determination of the reference position, the position of an adjacent body (2 or 3) in a plane which is coincident with the first measurement plane or which is parallel thereto is determined,
c) then, if required, further position measurements in accordance with the steps a) and b) are carried out on the bodies (1, 2, 3) with respect to a second measurement plane which is different to the first measurement plane and which includes a defined angle, in particular 90°, with the latter, and
d) then, if required, necessary position corrections are carried out on the one and/or other of the two bodies on the basis of the position differences, established in the measurement planes by means of the position measuring sensor (4), of the two bodies (1 and 2 or 3).

2. A position measuring sensor (10) for determining the spatial position of two bodies with respect to one another, comprising
a) a housing (12) with at least one outer contact surface (12a-12e) which can be applied in a defined manner to a countersurface on the respective body, and
b) at least one optical gyroscope (11) in the housing (12), which gyroscope is aligned in a defined manner by the plane (11a) of its optical ring with respect to the contact surface (12a-12e).

3. The position measuring sensor as claimed in claim 2, wherein the optical gyroscope is a fiber-optic gyroscope.

4. The position measuring sensor as claimed in claim 2 or 3, which comprises means (14) for the visible indication, outside of the housing (12),
aa) of the alignment of the plane (11a) of the optical ring with respect to the vertical and
bb) of the angular position of the optical ring with respect to a reference direction in the ring plane.

5. The position measuring sensor as claimed in one of claims 2 to 4, wherein the housing (12) as a plurality of contact surfaces (12a-12e) disposed in relation to one another.

6. The position measuring sensor as claimed in claim 5, wherein at least one contact surface (12a) to be applied in a defined manner to a body to be aligned of cylindrical or conical external contour consists of two planar surface portions (12a') which enclose a shallow angle with one another.

7. The position measuring sensor as claimed in one of claims 2 to 6, which comprises a plumb (16) set up on or in the housing (12) to establish, in particular, the position of the plane (11a) of the optical ring with respect to the vertical.

8. The position measuring sensor as claimed in one of claims 2 to 7, which comprises a computer interface (13) for further data processing.

## Revendications

1. Procédé pour aligner des objets l'un par rapport à l'autre, en particulier pour le positionnement parallèle d'arbres, de cylindres et analogues, caractérisé en ce que
a)on détermine, au moyen d'une sonde de mesure de position (4) comportant au moins un gyroscope optique (5) et applicable de façon définie aux objets à aligner (1, 2, 3), la position d'un premier (1) des objets à aligner dans un premier plan de mesure prédéterminé, constituant une position de référence,
b)on détermine ensuite, au moyen de la sonde de mesure de position (4), à l'intérieur d'un intervalle de temps prédéterminé après la détermination de la position de référence, la position d'un objet suivant (2 ou 3) dans un plan coïncidant avec le premier plan de mesure ou parallèle à celui-ci,
c)on effectue ensuite, si nécessaire, d'autres mesures de position suivant les étapes a) et b) pour les objets (1, 2, 3) par rapport à un second plan de mesure, différent du premier plan de mesure et formant avec ce dernier un angle défini, en particulier 90, et
d)on opère ensuite, dans la mesure où cela est nécessaire, des corrections de position à l'un et/ou à l'autre des deux objets, nécessaires sur la base des différences de position des deux objets (1 et 2, respectivement 3) observées au moyen de la sonde de mesure de position (4) dans les plans de mesure.

2. Sonde de mesure de position (10) pour déterminer la position spatiale de deux objets l'un par rapport à l'autre, caractérisée par
a)un boîtier (12) avec au moins une face de contact extérieure (12a - 12e) applicable de façon définie sur une face opposée sur l'objet respectif, et
b)au moins un gyroscope optique (11) dans le boîtier (12), qui est aligné de façon définie avec le plan (11a) de sa couronne optique par rapport à la face de contact (12a - 12e).

3. Sonde de mesure de position suivant la revendication 2, caractérisée en ce que le gyroscope optique est un gyroscope à fibre optique.

4. Sonde de mesure de position suivant la revendication 2 ou 3, caractérisée par des moyens (14) pour afficher, de façon visible de l'extérieur du boîtier (12),
aa)l'alignement du plan (11a) de la couronne optique par rapport à la verticale, et
bb)la position angulaire de la couronne optique par rapport à une direction de référence dans le plan de la couronne.

5. Sonde de mesure de position suivant l'une quelconque des revendications 2 à 4, caractérisée en ce que le boîtier (12) présente plusieurs faces de contact (12a - 12e) disposées l'une par rapport à l'autre.

6. Sonde de mesure de position suivant la revendication 5, caractérisée en ce qu'au moins une face de contact (12a) se compose de deux portées planes (12a') formant entre elles un angle plan, pour une application définie sur un objet à aligner ayant un contour extérieur cylindrique ou conique.

7. Sonde de mesure de position suivant l'une quelconque des revendications 2 à 6, caractérisée par un fil à plomb (16) sur ou dans le boîtier (12), pour observer en particulier la position du plan (11a) de la couronne optique par rapport à la verticale.

8. Sonde de mesure de position suivant l'une quelconque des revendications 2 à 7, caractérisée par un connecteur informatique (13) en vue du traitement ultérieur des données.
